# EUROPEAN PATENT APPLICATION

(11) **EP 3 415 863 A1**
(43) Date of publication of application: **19.12.2018**
(21) Application number: 17750165.7
(22) Date of filing: 03.02.2017
(51) Int. Cl.: G01B 11/00, G01B 11/26, G02B 3/00, G02B 7/02

(54) **MARKER**

(30) Priority: 10.02.2016 JP 2016023755
(71) Applicant: Enplas Corporation, Kawaguchi-shi, Saitama 332-0034 (JP)
(72) Inventor: SAITO, Tomohiro, Saitama 332-0034 (JP)
(74) Representative: Epping - Hermann - Fischer
(86) International application number: PCT/JP2017/003887
(87) International publication number: WO 2017/138441

(57) **Abstract**

A marker (10) includes a plurality of convex surface portions (13) which are formed using a translucent material and are arranged side by side in the X-direction. Each convex surface portion (13) is inclined in one direction in the X-direction. Optical axes (OA1) of each of the convex surface portions (13) intersect at an optical reference point (OP) on a product optical axis (PA), and each also intersect a bottom surface of a groove (15). Each groove (15) is arranged in such a way that the distance thereof from a central axis (CA) of each convex surface portion (13) increases with increased distance from the product optical axis (PA) in the X-direction. A colored portion (16) is accommodated in each groove (15).

## Description

### Technical Field

The present invention relates to a marker.

### Background Art

As an image indicator (marker) in which a pattern (mark) is projected onto a convex lens part having a convex surface part, an image indicating sheet including a lenticular lens and coloring layers is known. This lenticular lens has a configuration in which a plurality of cylindrical lenses are arranged side by side, and the coloring layers are disposed in respective cylindrical lenses so as to be observed as images of respective cylindrical lenses. With this configuration, a collective mark is formed by the images. The image indicating sheet is suitable for recognition of the position, orientation and the like of objects in the fields of augmented reality (AR), robotics, and the like (see, for example, PTL 1 and PTL 2).

### Citation List

### Patent Literature

PTL 1
   Japanese Patent Application Laid-Open No. 2013-025043
PTL 2
   Japanese Patent Application Laid-Open No. 2012-145559

### Summary of Invention

### Technical Problem

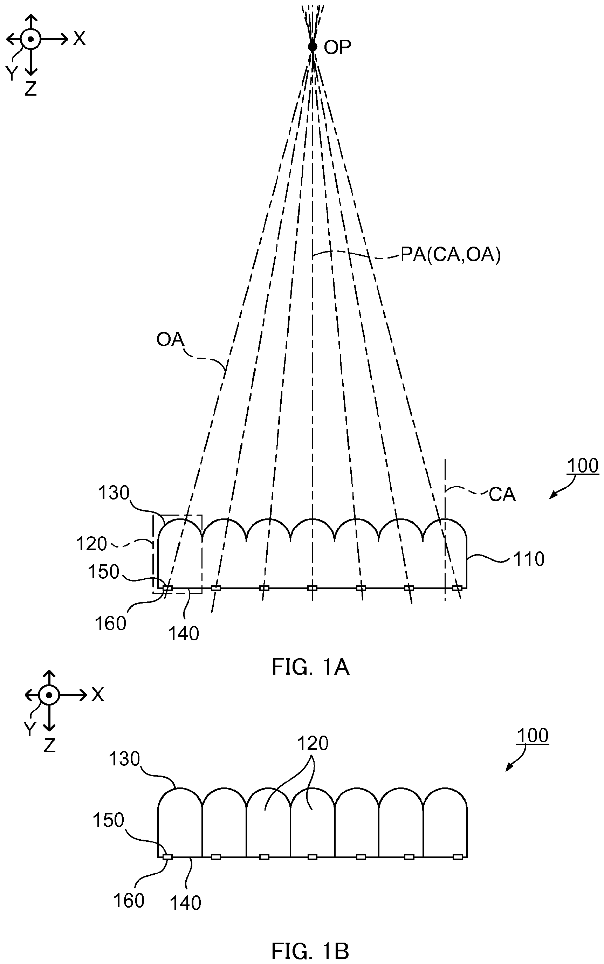

FIG. 1A schematically illustrates a cross section taken along an arrangement direction of cylindrical lens parts of a marker according to a reference example in which coloring layers are arranged as disclosed in the PTL, and FIG. 1B schematically illustrates only an arrangement of the cylindrical lens part in the marker. In the drawings, X indicates one direction in the plane direction of the marker, Y indicates a direction orthogonal to the X direction in the plane direction, and Z indicates a direction orthogonal to the X direction and the Y direction (the thickness direction of the marker). It is to be noted that FIG. 1B illustrates the region of the cylindrical lens part included in the lenticular lens part of FIG. 1A.

As illustrated in FIG. 1 for example, marker 100 includes lenticular lens part 110 formed of an optically transparent material, and lenticular lens part 110 includes a plurality of cylindrical lens parts 120 disposed in the plane direction. Cylindrical lens part 120 includes, on the front side thereof, convex surface part 130, and includes on the rear side thereof, rear surface part 140, groove 150 formed on rear surface part 140 and coloring part 160 disposed in groove 150. Coloring part 160 is optically identifiable with respect to rear surface part 140.

Grooves 150 are disposed at respective locations such that straight lines (optical axes OA) radially extending from optical reference point OP of marker 100 intersect the centers of the bottom surfaces of grooves 150. For example, when convex surface part 130 including the product optical axis PA is set as 0th convex surface part 130, nth groove 150 corresponding to nth convex surface part 130 in the X direction is disposed such that the center thereof is separated from central axis CA of the nth convex surface part 130 by a predetermined distance nGµm (e.g. G=0.8nµm) in a direction parallel to the bottom surface of groove 150.

In marker 100, the position of the observed mark varies depending on the observation position in the X direction. With this configuration, in marker 100, the mark is set only by the positions of the coloring parts in the X direction.

In marker 100, the mark is observed in a specific range around the intersection (also referred to as "the center point of the multi-lens part") of product optical axis PA and lenticular lens part 110 in the X direction. The specific range is set by the convex lens part, and is, for example, a range of approximately 26° from the center point of the multi-lens part in the X direction. Marker 100 has a room for improvement in widening the observation range in the X direction.

An object of the present invention is to provide a marker that has a wider observation range at least in one direction.

### Solution to Problem

A marker according to an embodiment of the present invention includes a multi-lens part including a plurality of optically transparent convex lens parts arranged along at least one arrangement direction. Each convex lens part includes a convex surface part, a detection object part disposed corresponding to the convex surface part and configured to be projected on the convex surface part as an optically detectable image, and an optical axis passing through the convex surface part and the detection object part corresponding to the convex surface part. A plurality of optical axes of the plurality of convex lens parts include first optical axes and a second optical axis, the first optical axes being outermost in the arrangement direction and intersecting each other, the second optical axis being represented by a straight line that bisects an angle between the first optical axes and passes through the multi-lens part. At least two of the plurality of the convex lens parts are tilted in the same orientation and at the same angle with respect to the arrangement direction. At least one of a plurality of detection object parts of the plurality of convex lens parts is disposed such that as a distance of the at least one of the plurality of the detection object parts from the second optical axis in the arrangement direction increases, a distance of the at least one of the plurality of the detection object parts from a central axis of the convex surface part corresponding to the at least one of the plurality of the detection object parts in the arrangement direction increases. At least one of the plurality of the optical axes of the plurality of convex lens parts is set such that the greater a distance of one of the convex lens parts including the at least one of the plurality of the optical axes from the second optical axis in the arrangement direction, the greater an intersection angle of the at least one of the plurality of the optical axes and a central axis of the convex surface of the one of the convex lens parts.

The marker according to the embodiments of the present invention provides wider observation range in at least one direction of the arrangement direction of the convex lens parts in comparison with a marker in which the mark is set only by the positions of the coloring parts in the direction along the rear surface of the convex lens part.

### BRIEF DESCRIPTION OF THE DRAWINGS

FIG. 1A schematically illustrates a cross section taken along an arrangement direction of cylindrical lens parts of a marker according to an reference example, in which hatching is omitted, and FIG. 1B schematically illustrates only an arrangement of the cylindrical lens parts in the marker;

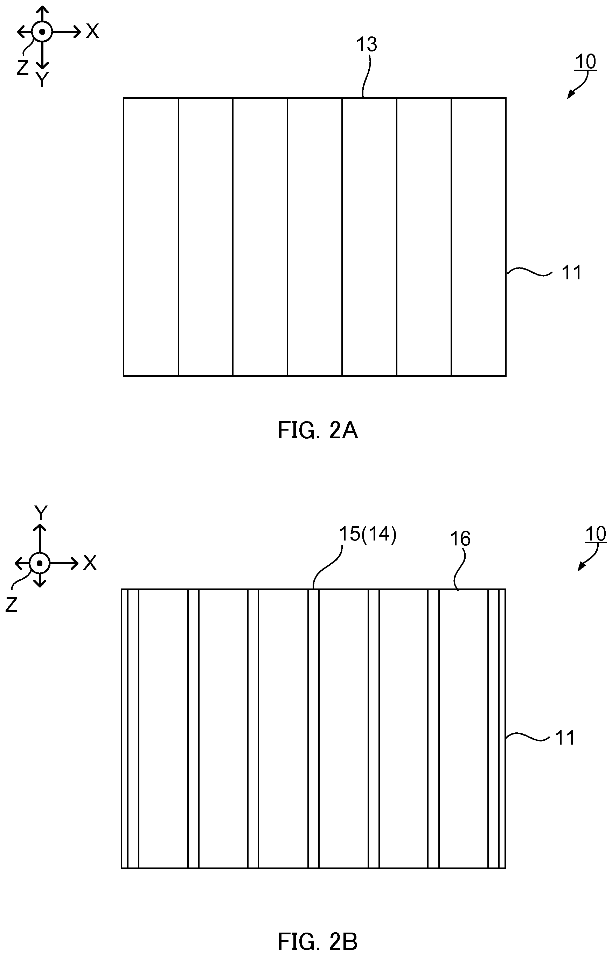

FIG. 2A is a plan view schematically illustrating a marker according to the first embodiment of the present invention, and FIG. 2B is a bottom view schematically illustrating the marker;

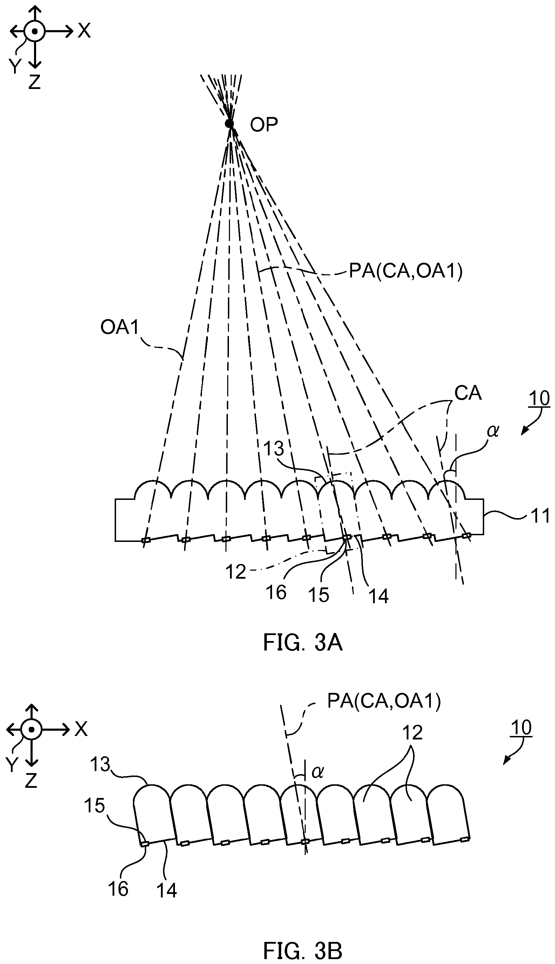

FIG. 3A schematically illustrates a cross section taken along an arrangement direction of convex lens parts of the marker according to a first embodiment of the present invention, in which hatching is omitted, and FIG. 3B schematically illustrates an arrangement of cylindrical lens parts in the marker in which each cylindrical lens part is set as a component unit;

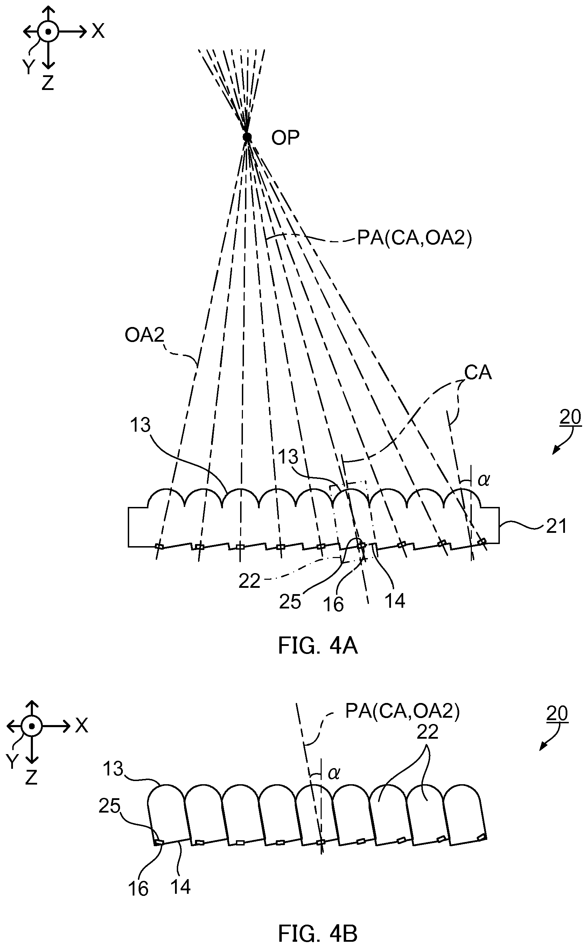

FIG. 4A schematically illustrates a cross section taken along the arrangement direction of convex lens parts of a marker according to a second embodiment of the present invention, in which hatching is omitted, and FIG. 4B schematically illustrates an arrangement of the cylindrical lens parts in the marker in which each cylindrical lens part is set as a component unit in the marker;

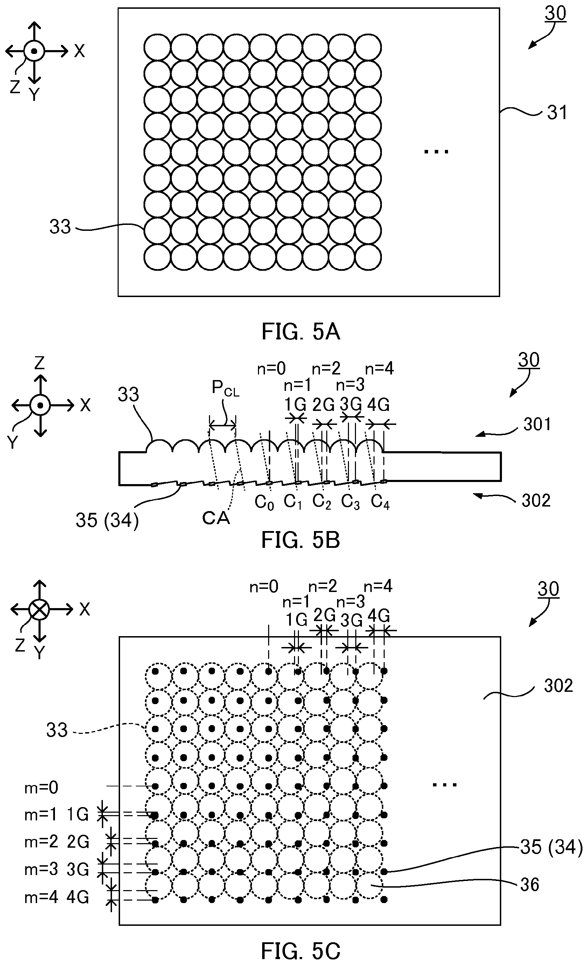

FIG. 5A is a plan view schematically illustrating a marker according to a third embodiment of the present invention, FIG. 5B is a partially enlarged sectional view schematically illustrating a cross section of the marker taken along an arrangement direction of convex lens parts, in which hatching is omitted, and FIG. 5C is a bottom view schematically illustrating the marker;

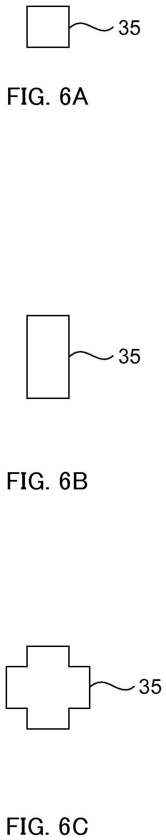

FIG. 6A is a plan view schematically illustrating a first modification of a recess in the marker according to the third embodiment, FIG. 6B is a plan view schematically illustrating a second modification of the recess, and FIG. 6C is a plan view schematically illustrating a third modification of the recess;

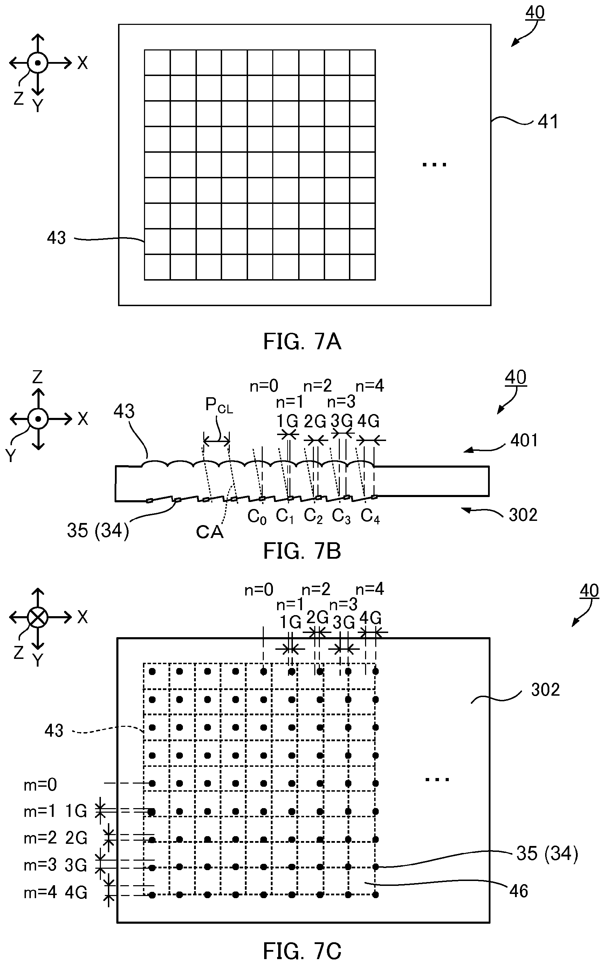

FIG. 7A is a plan view schematically illustrating a marker according to a fourth embodiment of the present invention, FIG. 7B is a partially enlarged sectional view schematically illustrating a cross section taken along an arrangement direction of convex lens parts in the marker, in which hatching is omitted, and FIG. 7C is a bottom view schematically illustrating the marker;

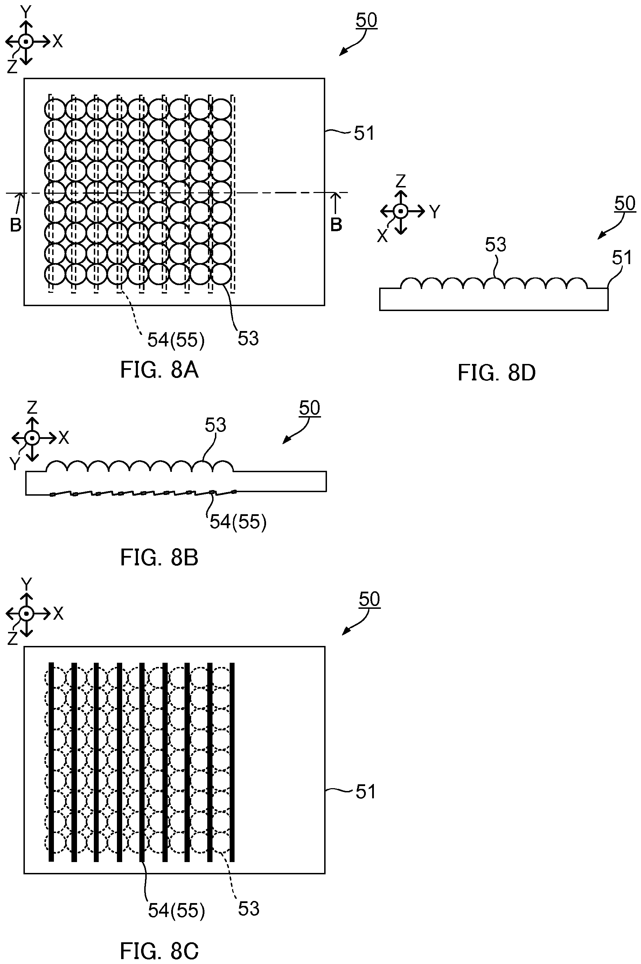

FIG. 8A is a plan view schematically illustrating a marker according to a fifth embodiment of the present invention, FIG. 8B is a partial sectional view schematically illustrating a part of the marker taken along line B-B of FIG. 8A, in which hatching is omitted, FIG. 8C is a bottom view schematically illustrating the marker, and FIG. 8D is a side view schematically illustrating the marker;

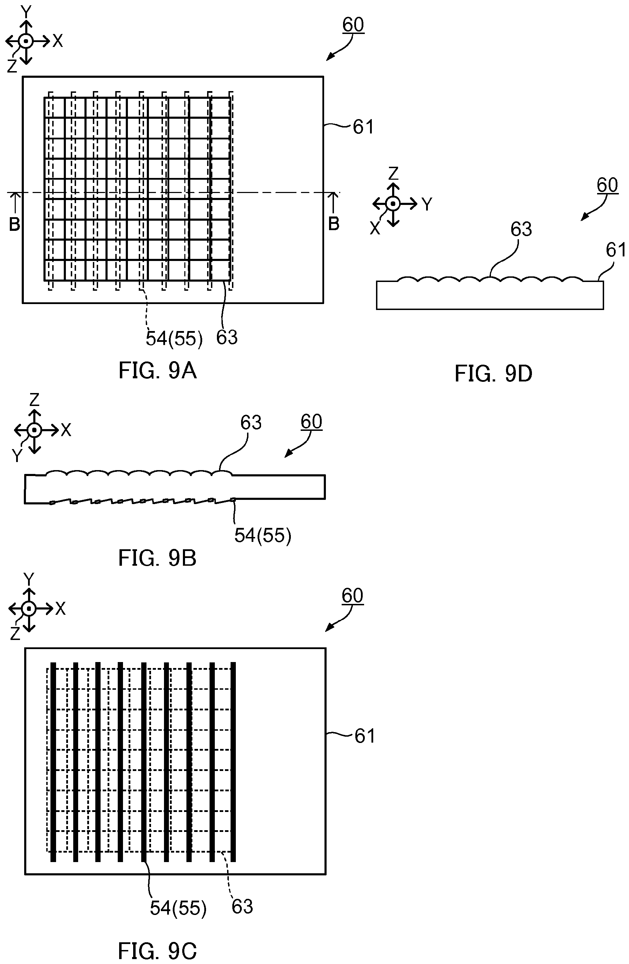

FIG. 9A is a plan view schematically including a marker according to a sixth embodiment of the present invention, FIG. 9B is a partial sectional view schematically illustrating a part of the marker taken along line B-B of FIG. 9A, in which hatching is omitted, FIG. 9C is a bottom view schematically illustrating the marker, and FIG. 9D is a side view schematically illustrating the marker; and

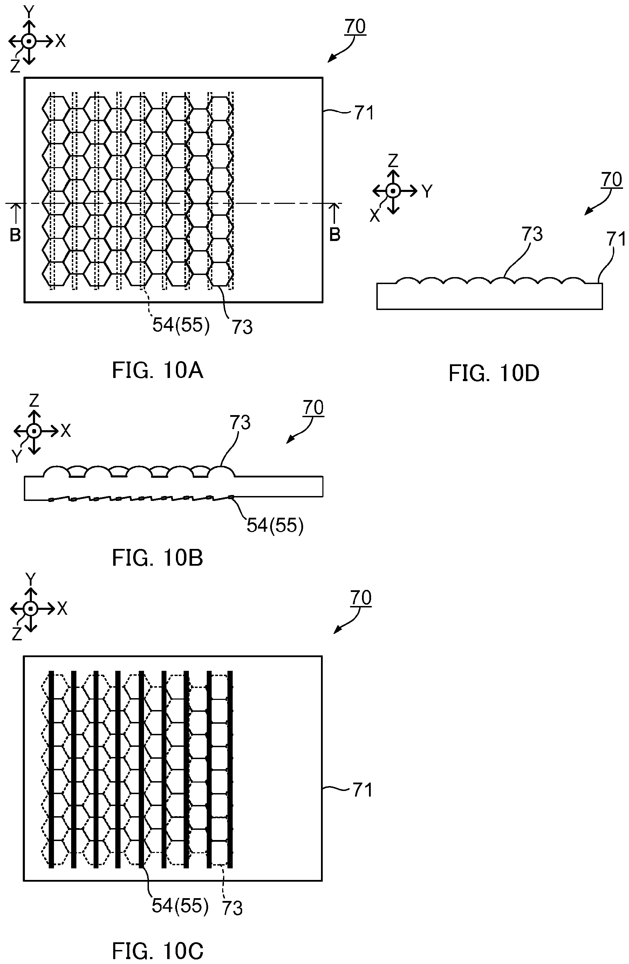

FIG. 10A is a plan view schematically illustrating a marker according to a seventh embodiment of the present invention, FIG. 10B is a partial sectional view schematically illustrating a part of the marker taken along line B-B of FIG. 10A, in which hatching is omitted, FIG. 10C is a bottom view schematically illustrating the marker, and FIG. 10D is a side view schematically illustrating the marker.

### DETAILED DESCRIPTION

### First embodiment

FIG. 3A schematically illustrates a cross-section of marker 10 along the arrangement direction of lenticular lens part 11, and FIG. 3B schematically illustrates an arrangement of cylindrical lens parts 12, each of which is a component unit of marker 10.

Marker 10 includes lenticular lens part 11. Lenticular lens part 11 includes a plurality of optically transparent cylindrical lens parts 12. Cylindrical lens parts 12 are arranged in the X direction. Lenticular lens part 11 is an integrated molded article of a plurality of cylindrical lens parts 12. Lenticular lens part 11 has a rectangular planar shape with the long side along the X direction and the short side along the Y direction, for example. Lenticular lens part 11 corresponds to a multi-lens part.

Each cylindrical lens part 12 is a convex lens part having a cylindrical shape. Each cylindrical lens part 12 is composed of optically transparent material. Examples of the optically transparent material include optically transparent colored or non-colored resins such as polycarbonate and acrylic resin, and optically transparent colored or non-colored inorganic materials such as glass. Preferably, in view of mass production, the optically transparent material is an optically transparent resin, and lenticular lens part 11 is an injection-molded article of such a resin. Preferably, in view of mass productivity and optical characteristics, the optically transparent material is a transparent resin.

Cylindrical lens parts 12 are tilted in the same orientation and at the same angle with respect to the X direction. Each cylindrical lens part 12 includes convex surface part 13, flat rear surface part 14, groove 15 formed on rear surface part 14, and coloring part 16 housed in groove 15.

Convex surface part 13 has the same cross-sectional shape in the XZ plane (also referred to as"XZ cross-sectional shape") entirely along the Y direction. Each convex surface part 13 has a rectangular planar shape with the long side along the Y direction and the short side along the X direction. Convex surface parts 13 have the same size in plan view, and, for example, the width (the length in the X direction) of each convex surface part 13 is 370 µm. In addition, the pitch of convex surface parts 13 is the center-to-center distance (described later) between two convex surface parts 13 adjacent to each other in the X direction, which is 370 µm as with the width.

The shape of convex surface part 13 in the XZ cross-sectional shape is, for example, a semicircular curve or a non-semicircular curve. The non-semicircular curve is a convex curve other than a semicircle, and is, for example, a curve composed of arcs having different curvature radiuses. Preferably, the non-semicircular curve is a curve whose curvature radius increases as the distance from the center of convex surface part 13 increases in the above-mentioned cross section. At its apex, convex surface part 13 includes a ridgeline along the Y direction.

Convex surface part 13 includes central axis CA. Central axis CA of convex surface part 13 is a normal of the convex surface part 13 passing through the center of a shape (a rectangular shape, see FIG. 2A) enclosed by the edge of the convex surface part 13, and is represented by, for example, a straight line that passes through the middle point of a straight line connecting the both ends of the convex surface part 13 and is orthogonal to the connecting straight line in the XZ cross section. That is, central axis CA is the normal to the apex of (ridgeline) of convex surface part 13, and bisects convex surface part 13.

Each central axis CA is tilted in the same orientation and at the same angle with respect to the X direction. For example, in FIG. 3A, each central axis CA is tilted at angle α to the left side with respect to the Z direction. The angle α can be appropriately set within the range of 0 to 20°.

Rear surface part 14 is a plane part disposed corresponding to each convex surface part 13. Rear surface part 14 is orthogonal to central axis CA of convex surface part 13. Rear surface part 14 may be smooth, or may have an appropriate surface roughness. Rear surface part 14 can be roughened by a common roughening process such as a blast process, and preferably, the surface roughness is 1 to 10 µm in arithmetic average roughness Ra, for example.

Groove 15 is formed on each rear surface part 14. As viewed along central axis CA, groove 15 has a slender rectangular shape elongated in the Y direction. Groove 15 has a rectangular shape in the XZ cross-sectional shape. Preferably, the depth of groove 15 (the distance between rear surface part 14 and the bottom surface of groove 15) is 10 to 100 µm.

In convex lens parts 12, the position of groove 15 is shifted toward either end of lenticular lens part 11 along the X direction from central axis CA of convex surface part 13 as the distance of groove 15 from product optical axis PA described later in the X direction increases. For example, when convex surface part 13 including the product optical axis PA is set as 0th convex surface part, the center of nth groove 15 corresponding to nth convex surface part 13 in the X direction is shifted away from central axis CA of the nth convex surface part 13 by a predetermined distance nGµm in the direction parallel to the bottom surface of groove 15.

Coloring part 16 is a colored composition, and is a solidified coating material containing a colorant such as black pigment, for example. The coating material has fluidity, and is a liquid composition or powder. The method of applying and solidifying the coating material may be appropriately selected from publicly known methods in accordance with the coating material. Examples of the method of applying the coating material include spray coating and screen printing. Examples of the method of solidifying the coating material include drying of a liquid coating material, curing of a curable composition (such as radical polymerizable compound) in the coating material, and baking of powder.

As described above, each rear surface part 14, each groove 15 and each coloring part 16 are disposed corresponding to each convex surface part 13, and groove 15 and coloring part 16 correspond to a detection object part. In addition, the bottom surface of groove 15 corresponds to an image surface of the detection object part.

Each cylindrical lens part 12 includes optical axis OA1 that passes through convex surface part 13 and groove 15 corresponding to convex surface part 13. Outermost optical axes OA1 in the X direction intersect each other. These intersecting optical axes OA1 correspond to first optical axes.

In addition, lenticular lens part 11 includes product optical axis PA. Product optical axis PA is represented by a straight line passing through the lenticular lens part, which is one of straight lines that bisect the angle between the outermost optical axes OA1. Product optical axis PA is the optical center of marker 10 and can serve as a reference in designing of marker 10. Product optical axis PA of marker 10 coincides with optical axis OP1 of convex surface part 13 disposed at the center in the X direction. In addition, optical reference point OP is located on product optical axis PA. Product optical axis PA corresponds to the second optical axis.

Each optical axis OA1 is set so as to intersect product optical axis PA, and for example, optical axis OA1 is set such that all optical axes OA1 converge at one given point separated from lenticular lens part 11 in the Z direction. That is, optical axes OA1 of cylindrical lens parts 12 are set such that the angle between optical axis OA1 of cylindrical lens part 12 and central axis CA of convex surface part 13 increases as the distance thereof from product optical axis PA in the X direction increases. In addition, the intersection point of optical axes OA1 is referred to as optical reference point OP.

As described above and as illustrated in FIG. 3B, marker 10 has substantially the same structure as that of an assembly in which each cylindrical lens part 12 including convex surface part 13, rear surface part 14, groove 15 and coloring part 16 is set as a component unit, and the component units are tilted to one direction along the X direction at angle α with respect to the Z direction and joined with each other in the X direction.

In marker 10, images of coloring parts 16 are projected onto convex surface parts 13 as optically detectable (e.g. black) images, and the images are observed as a collective mark on the surface of lenticular lens part 11.

Here, "optically detectable" means that the image of coloring part 16 projected on convex surface part 13 is detected based on the optical characteristics. "Optical characteristics" are, for example, the degrees of the color such as brightness, saturation and hue, or the optical intensity such as luminance. The optical characteristics may be appropriately detected in accordance with the use of marker 10, and may be detected by visual confirmation, or by using an optical detection device, for example. In addition, the optical characteristics may be detected directly or by using another device, and an example of the latter case is irradiation using a UV lamp for exciting a composition in the case where coloring part 16 is a transparent composition that emits fluorescence.

Here, as described above, the observation range in marker 100 is set to approximately 26°. As described above, the observation range is a range in which the mark is observed when the observation position is moved from the center point of the multi-lens part along the X direction. That is, in marker 100, the mark can be observed in the range of approximately 26° on the left and right sides in the X direction in FIG. 3A with respect to the center point of the multi-lens part as a reference (when viewed from a point just above the center point of the multi-lens part). The observation range is set by the shape of the convex surface part, for example.

Also in marker 10, the mark can be observed in the range of approximately 26° on the left and right sides from the center point of the multi-lens part in the X direction with respect to the intersection point of product optical axis PA and lenticular lens part 11 (the center point of the multi-lens part) as a reference. Since product optical axis PA coincides with central axis CA of cylindrical lens part 12 at the center, the angle of product optical axis PA with respect to the Z direction is α°. Accordingly, when marker 10 is observed from a point just above the center point of the multi-lens part in the same manner as marker 100, the observation range of marker 10 is increased by α° on the left side (the side to which central axis CA is tilted) in FIG. 3A, and reduced by α° on the right side (the side opposite to the side to which central axis CA is tilted) in FIG. 3A. That is, the observation range of marker 10 as viewed in the Z direction is approximately 26+α° on the left side in the X direction in the drawing in comparison with that of marker 100.

As is clear from the above description, marker 10 includes lenticular lens part 11 including a plurality of optically transparent cylindrical lens parts 12 arranged along the X direction. Each cylindrical lens part 12 includes convex surface part 13, detection object part (groove 15 and coloring part 16) disposed corresponding to convex surface part 13 and configured to be projected onto convex surface part 13 in the form of an optically detectable image, and optical axis OA1 that passes through convex surface part 13 and the detection object part corresponding to convex surface part 13. In addition, lenticular lens part 11 includes optical axes OA1 (first optical axes) that are outermost in the X direction and intersect each other in optical axes OA1 of cylindrical lens parts 12, and product optical axis PA (second optical axis) represented by a straight line that bisects the angle between the first optical axes and passes through lenticular lens part 11. Cylindrical lens parts 12 include cylindrical lens parts 12 tilted in the same orientation and at the same angle to the X direction. The detection object parts include a detection object part that is disposed such that as the distance thereof from the second optical axis of increases in the X direction, the detection object is more separated from central axis CA of convex surface part 13 in the X direction in each cylindrical lens part 12. Optical axes OA1 of cylindrical lens parts 12 include optical axis OA1 that intersects central axis CA of convex surface part 13 such that the intersection angle with respect to central axis CA increases as the distance of that optical axis OA1 from the second optical axis in the X direction increases. Accordingly, when viewed along the Z direction, the observation range of marker 10 on one side in the X direction is wider than that of marker 100.

### Second embodiment

FIG. 4A schematically illustrates a cross section of marker 20 along the arrangement direction of cylindrical lens parts 22, and FIG. 4B schematically illustrates an arrangement of cylindrical lens parts 22, each of which is a component unit in marker 20. Marker 20 is identical to marker 10 except for the installation position of the groove in the rear surface part.

Marker 20 includes lenticular lens part 21, and lenticular lens part 21 includes a plurality of optically transparent cylindrical lens parts 22. Each cylindrical lens part 22 includes convex surface part 13, rear surface part 14, groove 25 formed on rear surface part 14, and coloring part 16 housed in groove 25. Convex surface part 13, rear surface part 14 and coloring part 16 are identical to those of marker 10.

As with groove 15 of marker 10, as the distance thereof from product optical axis PA in the X direction increases, the positions of grooves 25 are more separated from respective central axes CA of convex surface parts 13 toward the both ends of lenticular lens part 21 in the X direction. The size of groove 25 is substantially the same as that of that of groove 15.

Groove 25 is different from groove 15 in the following points. First, groove 25 is disposed at a position where the intersection of optical axis OA2 of cylindrical lens part 22 and the bottom surface of groove 25 is the focal point of convex surface part 13. The focal point of convex surface part 13 is a point where light, which travels in parallel with optical axis OA2 of the convex surface part 13 and is incident on the convex surface part 13, substantially crosses the optical axis OA2 after refracted at the convex surface part 13. For example, the focal point of convex surface part 13 is a position where the cross-sectional area of the light flux of the crossing light beams condensed at the bottom surface of groove 25 is minimized. For example, the bottom surface of groove 25 is formed at the position of the focal point by adjusting the depth of groove 25. The bottom surface of groove 25 serves as an imaging surface.

In addition, optical axis OA2 of cylindrical lens part 22 intersects the imaging surface at the center of the imaging surface. For example, the imaging surface that intersects optical axis OA2 at the center thereof is formed by adjusting the width of groove 25, or by adjusting the position of the bottom surface of groove 25 in the X direction and/or the Z direction.

Further, optical axis OA2 of cylindrical lens part 22 is orthogonal to the imaging surface. For example, the imaging surface orthogonal to optical axis OA2 is formed by adjusting the orientation of the bottom surface of groove 25 in the XZ cross section.

As with marker 10, the observation range of marker 20 with respect to the center point of the multi-lens part as the reference when marker 20 is viewed in the Z direction is approximately 26+α° on the left side in the X direction in the drawing in comparison with that of marker 100. Furthermore, marker 20 has the following effects.

In marker 20, the bottom surface of groove 25 is located at the focal point of convex surface part 13. Accordingly, the image projected on convex surface parts 13, in particular, the images projected on convex surface parts 13 distanced from product optical axis PA in the X direction, are clearer in comparison with marker 10. Accordingly, in comparison with marker 10, the contrast of the mark is favorable, and the edge of the mark is clear.

In addition, in marker 20, optical axis OA2 intersects the imaging surface at the center of the imaging surface. Accordingly, variation of the size (for example, the width (the length in the X direction) of each image) of the image projected on convex surface parts 13 is reduced. Accordingly, in comparison with marker 10, the contrast of the mark is favorable, and the edge of the mark is clear.

Further, in marker 20, optical axis OA2 is orthogonal to the imaging surface. Accordingly, the image is more uniformly formed on each convex surface part 13. Accordingly, in comparison with marker 10, the contrast of the mark is favorable, and the edge of the mark is clear.

Accordingly, marker 20 forms clearer marks than marker 10.

### Third embodiment

FIG. 5A is a plan view schematically illustrating marker 30, FIG. 5B is a partially enlarged sectional view schematically illustrating a cross section of marker 30 taken along the XZ plane, in which hatching is omitted, and FIG. 5C is a bottom view schematically illustrating marker 30.

Marker 30 includes multi-lens part 31 formed of an optically transparent material and having a plurality of convex surface parts 33 arranged in the XY direction, and detection object parts that are disposed in respective convex surface parts 33 and configured to be projected onto convex surface parts 33 as optically detectable images. In marker 30, as in the second embodiment, when one convex surface part 33 and a detection object part corresponding to the one convex surface part 33 are set as a single component unit, the convex surface part 33 in the component unit is disposed such that the central axis of the convex surface part 33 extends along the Z direction, while the detection object part is disposed at a position orthogonal to optical axis OA in the component unit, for example.

The optical unit of marker 30 is a region defined by sectioning each convex surface part 33 by a planar shape in the X direction and the Y direction that is defined by straight lines composed of points whose distance to the center of one convex surface part 33 and distance to the centers of convex surface parts 33 adjacent to the one convex surface part 33 are equal to one another. That is, the optical unit of marker 30 is represented by a region including one convex surface part 33 and an oblique rectangular prism shape of a locus that is formed by moving, in parallel with central axis CA, a rectangular (square) composed of four straight lines that orthogonally passes through the middle points of the straight lines connecting the centers of one convex surface part 33 and convex surface parts 33 adjacent to the one convex surface part 33.

Marker 30 includes first surface 301 and second surface 302. First surface 301 includes a plurality of convex surface parts 33. In addition, second surface 302 includes a plurality of detection object parts and reflection parts 36, and each detection object part includes recess 34 and coloring part 35 provided therein. For example, reflection part 36 is portions corresponding to respective convex surface parts 33 in second surface 302, and having planar shapes identical to those of convex surface parts 33.

In the X direction, the product optical axis of marker 30 is represented by a straight line passing through first surface 301, which is one of straight lines that bisect the angle at the intersection of the optical axes of convex surface parts 33 that are outermost in the XZ plane. In the Y direction, the product optical axis of marker 30 is represented by a straight line passing through first surface 301, which is one of straight lines that bisect the angle at the intersection of the optical axes of convex surface parts 33 that are outermost in the YZ plane.

Convex surface part 33 is a curve of an arc of a semicircle or a curve of an arc of a non-semicircle in cross section. Convex surface part 33 of a curve of an arc of a semicircle forms a spherical lens, and convex surface part 33 of a curve of an arc of a non-semicircle forms an aspherical lens, for example. In a cross section of marker 30 taken along the XZ plane, convex surface part 33 forming an aspherical lens is represented by a curve whose curvature radius increases as a distance from its vertex increases along the direction orthogonal to central axis CA. The curvature radius may continuously increase or intermittently increase as the distance from the vertex increases. It is to be noted that, in marker 30, the vertex of convex surface part 33 is the intersection of convex surface part 33 and central axis CA.

In plan view, convex surface parts 33 have the same size, and each convex surface part has a circular shape, for example. For example, in plan view, the diameter of the shape of convex surface part 33 is 350 µm. The shape of convex surface part 33 is rotationally symmetrical about central axis CA.

Pitch P_{CL} of convex surface parts 33 is 350 µm in the X direction and the Y direction. The "pitch" means the distance (P_{CL}) between convex surface parts 33 adjacent to each other. For example, the pitch is the distance between intersections of convex surface part 33 and central axis CA of convex surface parts 33 adjacent to each other in the X direction or the Y direction.

Recess 34 has a substantially columnar shape formed on the rear surface (second surface 302) side of multi-lens part 31. Recess 34 is disposed at a position where the bottom surface thereof intersects the optical axis of convex surface part 33. Recess 34 is formed on the rear surface side of multi-lens part 31 such that the optical axis of convex surface part 33 intersects the center of the bottom surface at a right angle, for example.

In plan view, recess 34 has a circular shape. Recess 34 may have other planar shapes. For example, recess 34 may have a square planar shape illustrated in FIG. 6A, a rectangular planar shape illustrated in FIG. 6B, or a cross-like planar shape illustrated in FIG. 6C.

In marker 30, the center-to-center distance (|Cₙ-Cₙ₋₁|) between detection object parts adjacent to each other in the X direction is P_{CL}+nG µm, for example, and the center-to-center distance (|Cₘ-Cₘ₋₁|) between detection object parts adjacent to each other in the Y direction is P_{CL}+mG µm, for example. The "n" represents an order of a certain convex surface part 33 with respect to 0th convex surface part 33 in the X direction. The "m" represents an order of a certain convex surface part 33 with respect to 0th convex surface part 33 in the Y direction. With this configuration, the center-to-center distance of the detection object parts are greater than the center-to-center distance (P_{CL}) of the convex surface parts. That is, in marker 30, in the X direction and the Y direction, the pitch between convex surface parts 33 adjacent to each other is smaller than the center-to-center distance between the detection object parts (recesses 34) adjacent to each other.

Marker 30 may employ only one of the configuration of the first embodiment and the configuration of the second embodiment. In addition, marker 30 may be provided with convex surface parts 33 orientated in the above-mentioned manner and recesses 34 arranged in the above-mentioned manner only in the X direction or the Y direction. For example, in marker 30, recess 34 and coloring part 35 may be disposed in the above-mentioned positional relationship between the convex surface part and the detection object part in the cross section of marker 10 or marker 20 taken along the XZ plane in only one of two directions in the XY plane. For example, when recess 34 and coloring part 35 are located and shaped similarly to the groove and the coloring part of marker 10 in the cross section taken along the XZ plane in one of the X direction and the Y direction, marker 30 can achieve an effect identical to the effect of marker 10 in the one of the X direction and the Y direction.

While recess 34 is disposed at a position where the bottom surface of recess 34 intersects the optical axis of convex surface part 33 in the present embodiment, recess 34 may be disposed, as in the second embodiment, at a position where the bottom surface of recess 34 intersects the optical axis of convex surface part 33 at the center thereof at a right angle, and the intersection therebetween matches the focal point (image surface) of convex surface part 33. Also in this case, the optical unit is represented by a region including one convex surface part 33 and an oblique rectangular prism shape of a locus that is formed by moving, in parallel with central axis CA, a rectangular (square) composed of four straight lines that orthogonally passes through the middle points of the straight lines connecting the centers of one convex surface part 33 and convex surface parts 33 adjacent to the one convex surface part 33.

### Fourth embodiment

Marker 40 is identical to marker 30 except that multi-lens part 41 is provided in place of multi-lens part 31. Multi-lens part 41 is identical to multi-lens part 31 except that the convex surface part and the reflection part have rectangular planar shapes. FIG. 7A is a plan view schematically illustrating marker 40, FIG. 7B is a partially enlarged sectional view schematically illustrating a cross section of marker 40 taken along the XZ plane, in which hatching is omitted, and FIG. 7C is a bottom view schematically illustrating marker 40.

Marker 40 includes first surface 401 and second surface 302. First surface 401 includes a plurality of convex surface parts 43. Each convex surface part 43 has a square shape in plan view, and convex surface parts have the same size. For example, each side of the shape of convex surface part 43 in plan view is 350 µm, and pitch PCL of convex surface parts 43 is 350 µm in the X direction and the Y direction. In addition, reflection part 46 of second surface 302 has a shape identical to the plan shape of convex surface part 43.

The optical unit of marker 40 is represented by a region having a substantially oblique rectangular prism-like shape with the top surface as convex surface part 43 whose planar shape is a square, and with the bottom surface as the square shape of reflection part 46, for example.

In marker 40, as in marker 30, in the X direction and the Y direction, the pitch of convex surface parts 43 adjacent to each other is smaller than the center-to-center distance between detection object parts (recesses 34). As with marker 30, marker 40 can achieve an effect identical to the effect of marker 10 in the X direction and/or the Y direction.

### Fifth embodiment

FIG. 8A is a schematic plan view of marker 50, FIG. 8B is a partial sectional view including a part of marker 50 taken along line B-B of FIG. 8A, in which hatching is omitted, FIG. 8C is a bottom view of marker 50, and FIG. 8D is a side view of marker 50. Marker 50 is identical to marker 30 except that the detection object part is continuous in the Y direction, and that the orientation of the convex surface part forming a line along the Y direction is tilted by the above-described inclination only in the X direction.

Multi-lens part 51 includes a plurality of convex surface parts 53, and convex surface parts 53 are arranged in the X direction and the Y direction orthogonal to the X direction. Convex surface parts 53 form lines along the Y direction, and the lines of convex surface parts 53 are arranged in the X direction.

The detection object part is composed of recess 54 and coloring part 55 housed in recess 54. Recess 54 is a slender rectangular recess extending along the Y direction in the XY plane, and is disposed across convex surface part 53 arranged along the Y direction. In addition, recesses 54 are arranged in the X direction in such a manner as to correspond to the lines of convex surface part 53.

In the X direction, the detection object part is disposed corresponding to convex surface part 53 as in the embodiment described above. For example, in the X direction, in marker 50, the pitch between adjacent convex surface parts 53 (the distance between convex surface parts 53 of adjacent lines) is smaller than the distance between the centers of adjacent detection object parts (recesses 54) as in markers 30 and 40.

In addition, in a cross section (XZ plane) of marker 50 along the X direction, the optical axes of convex surface parts 53 arranged in a line in the Y direction extend in the same direction. The optical axes intersect the optical axis of multi-lens part 51 (the product optical axis of marker 50) at a position above marker 50 (a space on the convex surface part side). In addition, in the XZ plane, a plurality of the detection object parts include a detection object part whose bottom surface (imaging surface) is disposed at a position where the bottom surface intersects the optical axis of convex surface part 53. As with marker 30, the optical unit of marker 50 is represented by a region having one convex surface part 53 and a substantially oblique rectangular prism shape of a locus that is formed by moving, in parallel with the central axis of convex surface part 53, a planar rectangle of a grid sectioning the first surface into rectangles each including one convex surface part 53, for example.

In marker 50, a linear image along the Y direction is observed as a group of images projected on convex surface parts 53. This image appears such that the image moves away from the viewer as marker 50 is tilted to the viewer side with respect to the X direction. In marker 50, convex surface part 53 is curved not only in the X direction, but also in the Y direction, and thus, the contrast of the image in the Y direction in marker 50 is higher than that of marker 10. One possible reason for this may be that the shift of the focal length in the Y direction in marker 50 is smaller than that of marker 10.

As described above, marker 50 includes multi-lens part 51 and the detection object part, and multi-lens part 51 includes a plurality of convex surface parts 53 arranged in the X direction and the Y direction orthogonal to the X direction. Convex surface parts 53 form lines along the Y direction, and the lines of convex surface parts 53 are arranged in the X direction. In a cross section of marker 50 along the X direction, the optical axes of convex surface parts 53 arranged in a line in the Y direction extend in the same direction, and intersect the optical axis of multi-lens part 51 at a position above marker 50. In addition, the detection object part is formed across a plurality of convex surface parts 53 disposed in a line along the Y direction. A plurality of the detection object parts arranged in the X direction may be disposed at a position where the intersection of the optical axis of convex surface part 53 and the imaging surface convex surface part 53 is the focal point. As with markers 10 to 40, marker 50 provides a wider observation range on one side in a direction in which the central axis of convex surface part 53 is tilted, that is, in the X direction, in comparison with conventional marker 100 in which the mark is set by the positions of the coloring parts in the direction along the rear surface of the convex lens part.

### Sixth embodiment

FIG. 9A is a plan view of marker 60, FIG. 9B is a partial sectional view of a part of marker 60 taken along line B-B of FIG. 9A, in which hatching is omitted, FIG. 9C is a bottom view of marker 60, and FIG. 9D is a side view of marker 60. Marker 60 is identical to marker 50 except that multi-lens part 61 is provided in place of multi-lens part 51. Multi-lens part 61 is identical to multi-lens part 51 except that each of the convex surface part and the reflection part has a rectangular planar shape.

For example, convex surface part 63 has a square shape in plan view. In addition, for example, the shape of convex surface part 63 in a cross section along the optical axis of convex surface part 63 is represented by a curve whose curvature radius increases as the distance from the vertex of convex surface part 63 increases. As with marker 40, the optical unit of marker 60 is represented by a region having one convex surface part 63 and a substantially oblique rectangular prism shape of a locus that is formed by moving, in parallel with the central axis of convex surface part 63, a planar rectangle (square) of a grid sectioning the first surface into rectangles each including one convex surface part 53, for example.

As with markers 10 to 50, marker 60 provides a wider observation range on one side in a direction in which the central axis of convex surface part 63 is tilted (X direction) in comparison with conventional marker 100 in which the mark is set only by the positions of the coloring parts in the direction along the rear surface of the convex lens part. In addition, as with marker 50, marker 60 can provide a higher contrast of a detected image in the Y direction than marker 10.

Further, with marker 60, images can be more clearly detected regardless of the intensity of light incident on the first surface of multi-lens part 61 in comparison with marker 50. One possible reason for this may be that, practically, the first surface of marker 60 is composed only of convex surface part 63 (curved surface) and includes no flat surface part, and thus reflection light at the first surface is less likely to be generated or is weak in comparison with marker 50 although, in the case where the intensity of the incident light is high, the intensity of the reflection light of marker 60 such as the reflection light on the first surface is also high, and the visibility of the image might be reduced.

### Seventh embodiment

FIG. 10A is a plan view of marker 70, FIG. 10B is a partial sectional view of a part of marker 70 taken along line B-B of FIG. 10A, in which hatching is omitted, FIG. 10C is a bottom view of marker 70, and FIG. 10D is a side view of marker 70. As with marker 60, marker 70 is identical to marker 50 except that multi-lens part 71 is provided in place of multi-lens part 51. Multi-lens part 71 is identical to multi-lens part 51 except that the convex surface part and the reflection part has a polygonal shape in plan view.

For example, in plan view, convex surface part 73 has a regular hexagonal shape. In addition, for example, in a cross section along the optical axis, convex surface part 73 is represented by a curve whose curvature radius increases as the distance from the vertex of convex surface part 73 increases. Regarding the line of convex surface parts 73 in the Y direction, convex surface parts 73 are arranged along the Y direction such that their opposed sides are in contact with one another. In addition, the lines of convex surface parts 73 are arranged in the X direction such that each connecting part of convex surface parts 73 of one line is in contact with a corner of the hexagon of one convex surface part 73 of another line. In this manner, in marker 70, convex surface parts 73 are fully closely arranged in a collective manner over the entirety of the first surface of multi-lens part 71.

As with markers 30 and 40, the optical unit of marker 70 is represented by a region having one convex surface part 73 and a substantially oblique rectangular prism shape of a locus that is formed by moving, in parallel with the central axis of convex surface part 73, a planar rectangle (square) of a grid sectioning the first surface into rectangles each including one convex surface part 73, for example. The rectangle is defined with straight lines passing through the middle points of the sides shared by adjacent hexagons in the X direction, and straight lines that overlap the sides shared by adjacent hexagons in the Y direction.

As with markers 10 to 60, marker 70 provides a wider observation range on one side in a direction in which the central axis of convex surface part 73 is tilted, that is, in the X direction, in comparison with conventional marker 100 in which the mark is set by the positions of the coloring parts in the direction along the rear surface of the convex lens part. In addition, as with markers 50 and 60, marker 70 can provide a higher contrast of a detected image in the Y direction than marker 10.

Further, with marker 70, images can be more clearly detected regardless of the intensity of light incident on the first surface of multi-lens part 71 in comparison with marker 50, as with marker 60, and for the same reason as marker 60.

### Other embodiments

It should be understood by those skilled in the art that various modifications, combinations, sub-combinations and alterations may occur depending on design requirements and other factors in so far as they are within the scope of the appended claims or the equivalents thereof.

For example, the product optical axis of the marker may not coincide with any of the central axes of a plurality of convex surface parts.

In addition, the optical axes of the convex lens parts need only cross the product optical axis, and the crossing point of the optical axes of the convex surface parts may not be the optical reference point. For example, as long as a desired optical effect is obtained, the optical axes of the convex lens parts in one marker may include one or more group of optical axes of a plurality of convex lens parts whose angles with respect to the product optical axis (or with respect to the central axis) are identical.

Likewise, as long as a desired optical effect is obtained, the central axes of the convex lens parts may include one or more group of optical axes of a plurality of convex lens parts whose angles with respect to the Z direction are identical.

In addition, the optical reference point may not be located on the central axis of the convex lens part, or the cylindrical lens part, disposed at the center. For example, the optical reference point may be located on the central axis of a cylindrical lens part or a convex lens part disposed at an end of in the arrangement direction (e.g. the X direction) of the cylindrical lens parts or the convex lens parts in a marker.

While the detection object part includes a groove and a coloring part in the above-mentioned configuration, the detection object part may have other configurations. For example, the detection object part may include a protrusion and a coloring part, or may composed only of a coloring part such as a colored slender resin housing disposed in a transparent resin molded body. In addition, while the coloring part includes a solidified coating material in the above-mentioned configuration, the coloring part may be a colored sheet.

In addition, the rear surface part may be modified as long as the rear surface part can be optically recognized with respect to the detection object part. For example, the rear surface part may be irregularities formed by minute pyramidal prisms or a reflection surface formed by a metal vapor deposition film, or, may have a color other than those of the above-mentioned coloring parts.

In addition, the multi-lens part may not be an integrally molded article. For example, the marker may include a base material that positions and holds each cylindrical lens part or convex lens part in a desired orientation, and a plurality of cylindrical lens parts or convex lens parts that can be set as a component unit of the multi-lens part.

In addition, the inclination of the convex lens parts may not be one direction in the arrangement direction. For example, it is possible to employ a configuration in which a reference convex lens part is uprightly disposed at the center of the arrangement direction, and convex lens parts on both sides of the reference convex lens part in the arrangement direction are tilted toward the reference convex lens part. With convex lens parts arranged in this manner, the observation range can be further expanded by α° on both sides in the arrangement direction.

The disclosure of the specification, drawings, and abstract in Japanese Patent Application No. 2016-023755 filed on February 10, 2016 is incorporated herein by reference in its entirety.

### Industrial Applicability

The marker according to the embodiments of the present invention is suitable as a position detecting marker (or an angle detecting marker) for recognizing the position, orientation and the like of an object, and is suitable for expanding the effective observation range of the marker in a specific direction. Accordingly, the present invention is expected to contribute to development of the technical fields of the above-mentioned marker.

### Reference Signs List

10, 20, 30, 40, 50, 60, 70, 100 Marker
11, 21, 110 Lenticular lens part
12, 22, 120 Cylindrical lens part
13, 33, 43, 53, 63, 73, 130 Convex surface part
14, 140 Rear surface part
15, 25, 150 Groove
16, 35, 55, 160 Coloring part
31, 41, 51, 61, 71 Multi-lens part
34, 54 Recess
36, 46 Reflection part
301, 401 First surface
302 Second surface
CA Central axis
PA Product optical axis
OA, OA1, OA2 Optical axis
OP Optical reference point

## Claims

1. A marker, comprising:
a multi-lens part including a plurality of optically transparent convex lens parts arranged along at least one arrangement direction,
wherein each convex lens part includes:
a convex surface part,
a detection object part disposed corresponding to the convex surface part and configured to be projected on the convex surface part as an optically detectable image, and
an optical axis passing through the convex surface part and the detection object part corresponding to the convex surface part,
wherein a plurality of optical axes of the plurality of convex lens parts include first optical axes and a second optical axis, the first optical axes being outermost in the arrangement direction and intersecting each other, the second optical axis being represented by a straight line that bisects an angle between the first optical axes and passes through the multi-lens part,
wherein at least two of the plurality of the convex lens parts are tilted in the same orientation and at the same angle with respect to the arrangement direction,
wherein at least one of a plurality of detection object parts of the plurality of convex lens parts is disposed such that the greater a distance of at least one of the convex lens parts including the at least one of the plurality of the detection object parts from the second optical axis in the arrangement direction increases, the greater a distance of the at least one of the plurality of the detection object parts from a central axis of the convex surface part corresponding to the at least one of the plurality of the detection object parts in the arrangement direction, and
wherein at least one of the plurality of the optical axes of the plurality of convex lens parts is set such that the greater a distance of at least one of the convex lens parts including the at least one of the plurality of the optical axes from the second optical axis in the arrangement direction, the greater an intersection angle of the at least one of the plurality of the optical axes and a central axis of the convex surface of the at least one of the convex lens parts.

2. The marker according to claim 1, wherein the detection object part of the each convex lens part is disposed at a position where an intersection of the optical axis of the each convex lens part and an imaging surface of the detection object part is a focal point of the convex surface part.

3. The marker according to claim 2, wherein the optical axis of the each convex lens part intersects the imaging surface at a center of the imaging surface.

4. The marker according to claim 2 or 3, wherein the optical axis of the each convex lens part is orthogonal to the imaging surface.

5. The marker according to any one of claims 1 to 4, wherein the multi-lens part is formed of a transparent resin.
